(19) Europäisches Patentamt
European Patent Office
Office européen des brevets

(11) Veröffentlichungsnummer: **0 309 761 B1**

(12) **EUROPÄISCHE PATENTSCHRIFT**

(45) Veröffentlichungstag der Patentschrift: **12.02.92**

(51) Int. Cl.$^5$: **B64F 1/22**

(21) Anmeldenummer: **88114320.0**

(22) Anmeldetag: **02.09.88**

(54) **Schleppfahrzeug für Flugzeuge Schwenkantrieb Hubschaufel.**

(30) Priorität: **28.09.87 DE 3732663**

(43) Veröffentlichungstag der Anmeldung:
**05.04.89 Patentblatt 89/14**

(45) Bekanntmachung des Hinweises auf die Patenterteilung:
**12.02.92 Patentblatt 92/07**

(84) Benannte Vertragsstaaten:
**AT BE CH ES FR GB IT LI NL SE**

(56) Entgegenhaltungen:
**DE-A- 3 327 628**
**DE-A- 3 534 045**
**FR-A- 2 454 409**

(73) Patentinhaber: **Krauss-Maffei Aktiengesellschaft**
**Krauss-Maffei-Strasse 2**
**W-8000 München 50(DE)**

(72) Erfinder: **Pollner, Jürgen, Dipl.-Ing. FH**
**Fritz-Reuter-Strasse 36**
**W-8000 München 60(DE)**
Erfinder: **Trummer, Gregor, Dipl.-Ing. FH**
**Alpenblick 5**
**W-8134 Aschering(DE)**
Erfinder: **Mölzer, Peter, Dipl.-Ing.**
**Geranienweg 7**
**W-8061 Schwabhausen(DE)**

**EP 0 309 761 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Schleppfahrzeug für Flugzeuge von der im Oberbegriff des Anspruchs 1 angegebenen Art.

Bei einem aus DE-OS 33 27 628 bekannten Schleppfahrzeug dieser Art bewirkt der an der Hubschaufel exzentrisch zu deren Schwenkachse angreifende Hubzylinder während des ersten Teiles eines Ausfahrhubes zunächst das Ausschwenken der Hubschaufel und anschließend das Drehen der Schwinge, um die ausgefahrene Hubschaufel gegen das Bugrad zu bewegen. Hierbei muß jedoch die Schwinge zunächst durch Arretiermittel gegen Drehung gesichert sein, bis die Schaufel ausgeschwenkt und in ausgeschwenkter Lage durch ein Gesperre gesichert ist. Zu diesem Zeitpunkt müssen dann die Arretiermittel der Schwinge freigegeben werden. Beim Lösen der Hubvorrichtung muß, wenn die Schwinge das Ende ihres Rückweges erreicht hat, das Gesperre gelöst werden, damit der Hubzylinder auf dem letzten Teil seines Einfahrhubes die Hubschaufel in die Ruhelage zurückschwenkt. Das Betätigen bzw. Lösen von Arretiermitteln, Gesperren od.dgl. zu bestimmten Zeitpunkten, d.h. an bestimmten Wegpunkten der zu bewegenden Teile, erfordert aber einen zusätzlichen Aufwand und ist störanfällig, so daß die Betriebssicherheit der gesamten Vorrichtung zu wünschen übrig läßt.

Der Erfindung liegt die Aufgabe zugrunde, bei einem Schleppfahrzeug der genannten Art die Hubvorrichtung so auszubilden, daß die richtige Reihenfolge der Schwenk- und Hubbewegungen der Hubschaufel mit einfachen Mitteln zwangsläufig sichergestellt wird.

Die erfindungsgemäße Lösung der Aufgabe ist im Anspruch 1 angegeben. Die Unteransprüche beziehen sich auf weitere vorteilhafte Ausgestaltungen, wobei durch die Merkmale des Anspruchs 3 eine einfache, keinen Eingriff von außen erfordernde Arretierung der Hubschaufeln in der ausgeschwenkten Stellung bewirkt wird.

Eine Ausführungsform der Erfindung wird anhand der Zeichnungen erläutert. Es zeigt.

- Fig. 1 eine schematische perspektivische Darstellung des Schleppfahrzeugs;
- Fig. 2 und 3 eine Seitenansicht der Hubschaufelanordnung in der eingeschwenkten bzw. ausgeschwenkten Stellung der Hubschaufel;
- Fig. 4 eine Draufsicht auf die Hubschaufelanordnung mit ein- bzw. ausgeschwenkter Stellung der Hubschaufel, teilweise im Schnitt nach der Linie A-A von Fig. 3;
- Fig. 5 einen vereinfachten Hydraulikschaltplan der Hubvorrichtung.

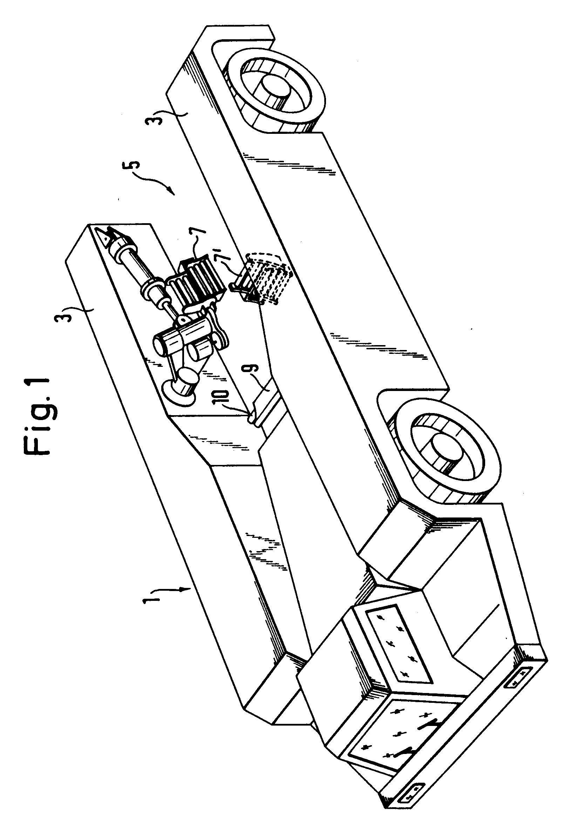

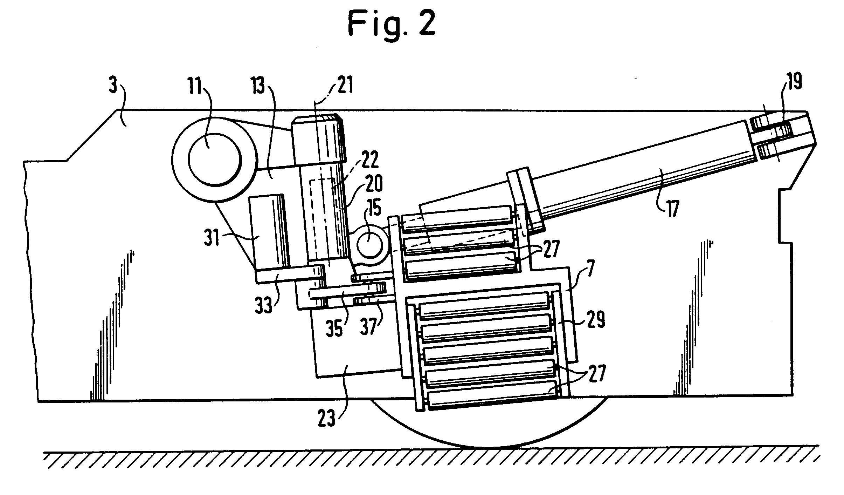

Das in Fig. 1 schematisch dargestellte Schleppfahrzeug 1 hat ein gabelförmiges Fahrgestell mit zwei Seitenschenkeln 3, die zwischen sich eine nach hinten offene Fahrgestellausnehmung 5 begrenzen. Das Schleppfahrzeug wird rückwärts derart gegen das zu schleppende Flugzeug manövriert, daß das Bugfahrwerk des Flugzeuges in die Ausnehmung 5 eintritt. Anschließend wird das Bugrad des Flugzeuges von einer Hubvorrichtung mit zwei Hubschaufeln 7 hintergriffen und durch Vorwärtsbewegen der Hubschaufeln (unter entsprechender Rückwärtsbewegung des Schleppfahrzeuges 1) angehoben, bis es von den Hubschaufeln 7 und einer Auffahrrampe 9 des Schleppfahrzeuges in angehobener Stellung abgestützt wird. Zusätzliche (in Fig. 1 der Einfachheit halber nicht dargestellte) Niederhalter wirken zusätzlich auf die Lauffläche des Bugrades von oben her ein, so daß das Bugrad auch nicht nach oben ausweichen kann und am Schleppfahrzeug 1 festgespannt ist. Schleppfahrzeug 1 und Flugzeug bilden dann einen sehr stabilen Schleppverband, der ein Schleppen des Flugzeuges mit größerer Sicherheit und vor allem auch mit höherer Geschwindigkeit ermöglicht, als dies mit den bisher üblichen Schleppfahrzeugen, die mit dem Flugzeug über eine Zugstange verbunden sind, möglich ist.

Damit das Bugfahrwerk des Flugzeugs in die Heckausnehmung 5 des Schleppfahrzeuges 1 eintreten kann, müssen die Hubschaufeln 7 in eine an der Innenwandung des jeweiligen Seitenschenkels 3 anliegende Ruhestellung eingeschwenkt und anschließend zum Hintergreifen des Bugrades ausgeschwenkt werden können. In Fig. 1 ist die eine Hubschaufel 7 in der eingeschwenkten, die andere in der ausgeschwenkten Stellung dargestellt. Hierfür dienen hydraulische Antriebsvorrichtungen, die im folgenden näher beschrieben werden.

Bei der Konstruktion der Hubvorrichtung und ihres hydraulischen Antriebes müssen bestimmte Forderungen und Bedingungen beachtet werden, die sich aus dem Einsatzzweck des Schleppfahrzeuges und den dabei zu beachtenden Sicherheitsgesichtspunkten ergeben. Zum einen ist zu berücksichtigen, daß die Hubvorrichtung im eingeschwenkten Zustand nur sehr wenig Platz in Querrichtung des Schleppfahrzeuges beanspruchen darf. Die lichte Breite innerhalb der Ausnehmung 5 muß ausreichen, um auch die Bugfahrwerke der größten gängigen Verkehrsflugzeugtypen (z.B. Boeing B 747) aufzunehmen, die z.B. einen Freiraum bis 1,60 m Breite benötigen. Andererseits darf die Gesamtbreite des Schleppfahrzeuges einen Maximalwert nicht übersteigen, der durch die vorhandenen Fahrwege, Durchfahrten usw. eines Flughafens vorgegeben ist und in praktischen Fällen nicht über 4,20 m liegen kann. Es verbleibt dann für jeden Seitenschenkel 3 einschließlich der Hubvorrichtung eine Breite von maximal 1,30 m, und wenn der Raum, der vom jeweiligen Hinterrad einschließlich seiner Lagerung und gegebenenfalls Lenkung benötigt wird, abgezogen wird, verbleibt für die eigentliche Hubeinrichtung eine Breite von maximal ca. 0,3 - 0,4 m. Trotz dieses geringen zur Verfügung stehenden Platzes muß die Hubvorrichtung selbstverständlich ausreichend stark dimensioniert sein, um die für das Anheben des Bugrades mit dem darauf lastenden Teil des Flugzeuggewichtes erforderlichen Kräfte aufbringen zu können.

Ein weiterer Gesichtspunkt besteht darin, daß für die Steuerung der Bewegungen der Hubvorrichtung möglichst keine komplizierten elektronischen Steuereinrichtungen erforderlich sein sollen, die mit elektronischen Positionsgebern od.dgl. arbeiten. Derartige elektronische Einrichtungen haben sich unter den rauhen Einsatzbedingungen des Flughafenbetriebes und wegen der Störeinflüsse durch die Nähe starker elektronischer Strahlungs- und Signalquellen, als zu sehr störanfällig erwiesen. Die nachstehend beschriebene Hubvorrichtung wurde unter Beachtung dieser Gesichtspunkte konstruiert.

Gemäß Fig. 2, die die Hubvorrichtung bei eingeschwenkter Lage der Hubschaufel zeigt, ist am Seitensteg 3 des Schleppfahrzeuges in einem horizontalachsigen Schwenklager 11 eine Schwinge 13 gelagert, an der in einem Gelenk 15 die Kolbenstange eines Hubzylinders 17 angreift, dessen Ende bei 19 am Seitensteg 3 des Fahrgestells gelagert ist. An der Schwinge 13 ist in einer Lagerhülse 20 mit annähernd lotrecht stehender (in der Stellung nach Fig. 2 etwas nach vorne geneigter) Achse 21 drehbar die Welle 22 eines Hubschaufelträgers 23 gelagert, der die eigentliche Hubschaufel 7 trägt. Diese Hubschaufel 7 ist als Rollenbock mit einer Anzahl paralleler Rollen 27 ausgebildet, wobei die unteren fünf Rollen an einem an der Hubschaufel 7 schwenkbar gelagerten Rahmen 29 sitzen. Auf diese Weise kann sich der untere Teil der Hubschaufel 7 an unterschiedliche Größen des jeweils zu ergreifenden Bugrades eines Flugzeuges anpassen.

Ferner kann die ganze Hubschaufel im Hubschaufelträger 23 um eine zur Achse 21 rechtwinklige Achse 36 kippbar gelagert sein und beim Vorwärtsschwenken der Schwinge 13 eine durch ein Lenkergestänge (nicht dargestellt) gesteuerte Kippbewegung zum Untergreifen des Bugrades durchführen.

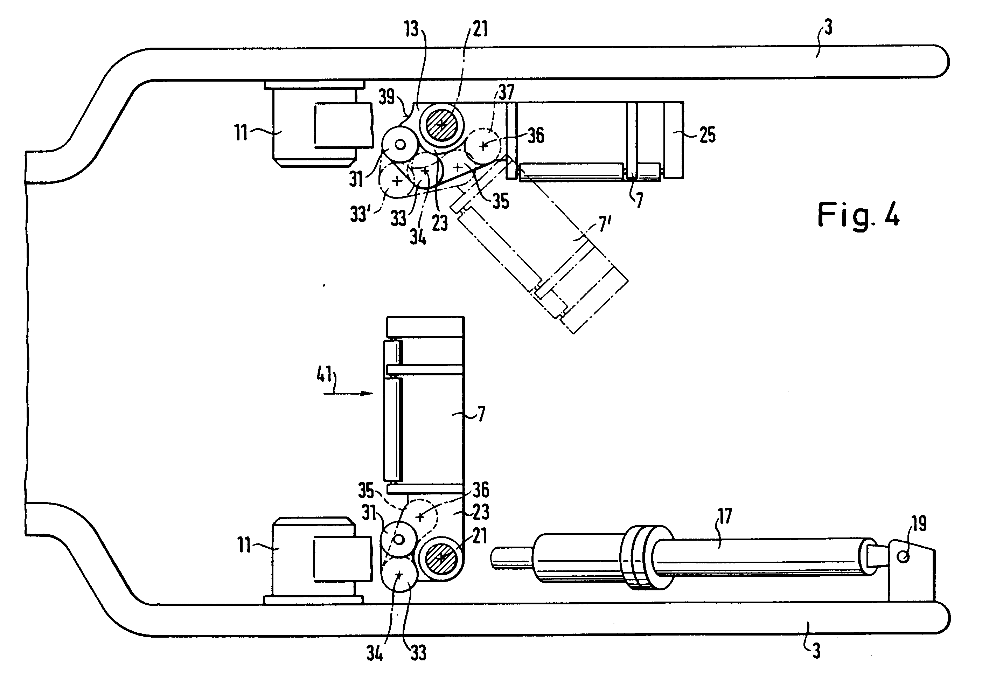

Die Schwenkbewegung des Hubschaufelträgers 23 mit der Hubschaufel 7 um die lotrechte Schwenkachse 21 wird von einem hydraulischen Schwenkmotor 31 bewirkt, der ebenfalls an der Schwinge 13 befestigt ist, und dessen Drehachse parallel zur Schwenkachse 21 liegt. Auf der Welle dieses hydraulischen Drehmotors 31 sitzt drehfest ein Kurbelarm 33, der über einen Koppellenker 35 gelenkig mit einem Schwenkarm 37 des Hubschaufelträgers 23 verbunden ist. Wie man insbesondere aus dem oberen Teil von Fig. 4 erkennt, bildet die ortsfeste Schwenkachse 21 und die ortsfeste Achse des Schwenkantriebs 31 sowie die Gelenkachse 34 zwischen dem Kurbelarm 33 und dem Koppellenker 35 bzw. die Gelenkachse 36 zwischen dem Koppellenker 35 und dem Schwenkarm 37 ein Vierpunkt-Gelenkgetriebe.

In der eingeschwenkten Lage der Hubschaufel 25 gemäß dem oberen Teil von Fig. 4 liegt der Kurbelarm 35 seitlich gegen den Hubschaufelträger 23 an, wodurch ein Endanschlag gebildet wird, der die eingeschwenkte Lage der Hubschaufel 7 festlegt. Eine weitere Drehung entgegen dem Uhrzeigersinn ist nicht mehr möglich. Wird der hydraulische Drehmotor 31 mit Hydraulikmedium beaufschlagt, dann dreht er den Kurbelarm 33 im Uhrzeigersinn in der oberen Hälfte von Fig. 4, wodurch die Anordnung z.B. in die strichpunktiert gezeichnete Zwischenlage gelangt, bei der sich der Kurbelarm z.B. in die Stellung 33′ und die Hubschaufel in die Stellung 7′ bewegt haben. Der Drehmotor 31 wird weiter beaufschlagt, bis der Kurbelarm 33 einen Schwenkweg von mehr als 180° im Uhrzeigersinn zurückgelegt hat und gegen einen Endanschlag 39 an der Schwinge 13 anschlägt. In dieser Stellung des Kurbelarms 33, die im unteren Teil von Fig. 4 gezeigt ist, hat der Koppellenker 35 den Hubschaufelträger 23 mit der Hubschaufel 7 in die voll ausgeschwenkte, um 90° vom Seitensteg 3 abstehende Lage geschwenkt. Der von den Längsachsen des Kurbelarms 33 und des Koppellenkers 35 gebildete Winkel, der während des Schwenkvorgangs zunächst ständig kleiner wird, erreicht den Wert Null, bevor der Kurbelarm 33 am Endanschlag 39 angekommen ist, und bei der restlichen Schwenkbewegung bewegt sich die Längsachse des Koppellenkers 35 über die Längsachse des Kurbelarms 33 hinaus, z.B. sie wechselt von der einen auf die andere Seite über. Dies hat zur Folge, daß die Hubschaufel 7 in der ausgeschwenkten Stellung (gemäß dem unteren Teil von Fig. 4) mechanisch gegen ein Einschwenken verriegelt ist. Auf die Hubschaufel im Sinne des Pfeils 41 einwirkende Kräfte, wie sie bei Hintergreifen und Anheben des Bugrades des Flugzeuges ausgeübt werden, können kein Verschwenken der Hubschaufel 7 bewirken, da das von einer solchen Kraft über den Koppelarm 5 auf den Kurbelarm 33 übertragene Drehmoment eine solche Richtung hat, daß es den Kurbelarm 33 gegen den Endanschlag 39 drückt. Zusätzlich kann auch der Koppellenker 35 an seiner Innenseite eine solche Formgebung haben, daß er ständig in Anlage an der Seitenfläche des Hubschaufelträgers 23 gehalten ist.

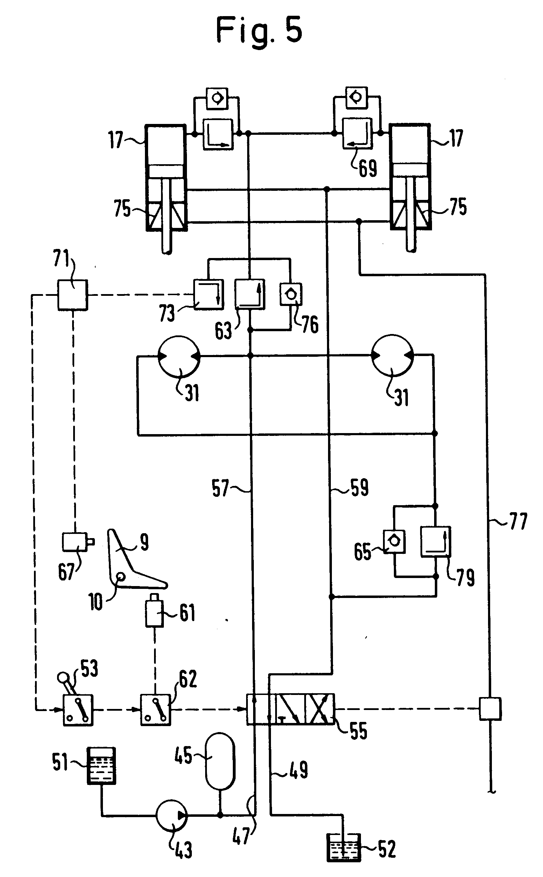

Die Arbeitsweise der Vorrichtung wird anhand des vereinfachten Hydraulikschaltplans gemäß Fig. 5 im folgenden erläutert. In Fig. 5 sind Hydraulikleitungen mit dicken Vollinien und elektrische Signalleitungen mit gestrichelten Linien dargestellt. Als hydraulisch zu betätigende Einrichtungen sind die Hubzylinder 17 und die Drehmotoren 31 der beiden Fahrzeugseiten symbolisch darges tellt. Der Hydraulikdruck wird von einem Versorgungssystem, umfassend einen Vorratsbehälter 51, eine Pumpe 43 und gegebenenfalls einen Druckspeicher 45, in die Druckleitung 47 geliefert. Eine Leckleitung 49 führt zu einem Behälter 52.

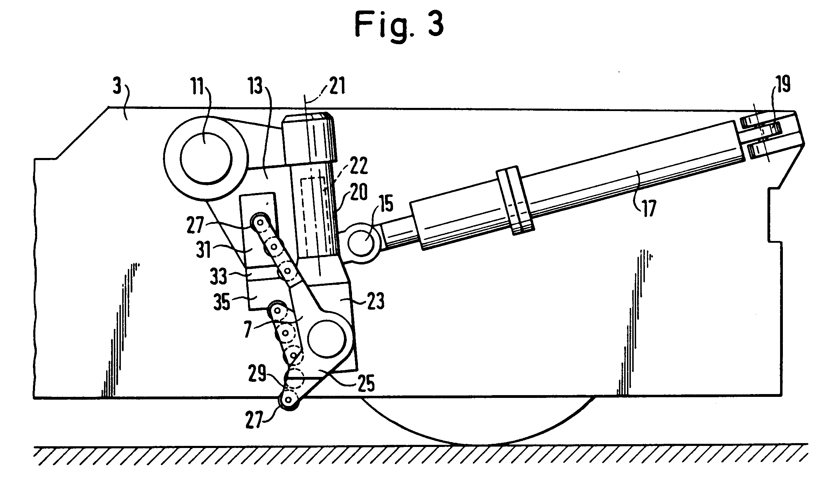

Ein vom Fahrer des Fahrzeugs mittels eines Hebels 53 elektrisch betätigbares Ventil 55 kann zwei Hydraulikleitungen 57, 59 wechselweise mit der Druckleitung 47 und der Leckleitung 49 oder umgekehrt verbinden. Dargestellt ist die Stellung des Ventils 55 für den Hubvorgang, d.h. für das Einschwenken und anschließende Vorwärtsbewegung der Hubschaufeln 25. Die Bewegung des Ventils 55 in diese Stellung, d.h. die Auslösung des Hubvorgangs,kann davon abhängig gemacht werden, daß das Fahrzeug soweit an das Bugrad eines Flugzeuges herangefahren wurde, daß das Bugrad die kippbar gelagerte Auffahrrampe 9 (vgl. Fig. 1), in Fig. 5 nur symbolisch dargestellt, berührt und nach unten kippt, wodurch ein Endschalter 61 betätigt wird, der über ein Relais 62 das Ventil 55 für Betätigung freigibt. In der gezeigten Stellung gelangt Hydraulikmedium über die Leitungen 47 und 57 zu den Drehmotoren 31, wodurch diese angetrieben werden und die zugeordneten Hubschaufeln 7 aus der Ruhestellung gemäß Fig. 2 in die Arbeitsstellung gemäß Fig. 3 schwenken. Während dieses Vorgangs ist der in der Leitung 57 herrschende Druck kleiner als der Öffnungsdruck eines Druckschaltventils 63, welches die Zuführung von Hydraulikmedium aus der Leitung 57 zu den Hubzylindern 17 sperrt. Während der Betätigung der Drehmotoren 31 kann das Hydraulikmedium aus ihnen über ein Rückschlagventil 65 und die Leitungen 59 und 49 abfließen.

Wenn die Drehmotoren 31 am Ende ihres Drehweges angekommen sind, d.h. wenn der Kurbelarm 33 am Anschlag 39 angekommen ist (Fig. 4), steigt der Hydraulikdruck in der Leitung 57 an, so daß das Druckschaltventil 63 öffnet und nunmehr die kolbenseitigen Arbeitsräume der Hubzylinder 17 mit Hydraulikmedium beaufschlagt werden, so daß die Kolben ausgefahren werden, um die Hubschaufeln 7 um die horizontale Schwenkachse 11 nach vorne zu bewegen. Hierbei kann das Hydraulikmedium aus den stangenseitigen Arbeitsräumen der Hubzylinder 17 über die Leitungen 59 und 49 abfließen. Während dieser Hubbewegung wird das Bugrad des Flugzeuges von den Hubschaufeln 7 nach vorne auf die Auffahrrampe 9 geschoben, und wenn sein Auflagepunkt sich über die Kippachse 1 0 der Auffahrrampe 9 hinausbewegt hat, kippt die Auffahrrampe 9 nach vorne und betätigt einen weiteren Endschalter 67. Dessen Signal gelangt in eine Schalteinheit 71, welche einen Druckschalter 73 aktiviert, der auf einen bestimmten, gewünschten Einspanndruck $P_E$ eingestellt ist. Schließlich erreicht das Bugrad einen Endanschlag, so daß es nicht weiter bewegt werden kann und der Druck im Hubzylinder 17 stark ansteigt. Sobald der Enddruck $P_E$ erreicht ist und der Druckschalter 69 anspricht, wird durch das gleichzeitige Vorliegen der Signale von den Schaltern 67, 73 das Ende des Hubvorgangs angezeigt, wodurch die Schalteinheit 71 verschiedene Befehle z.B. an andere Teile des Hubsystems, wie z.B. ein Niederhalter, gibt. Der Hubzylinder 17 bleibt mit dem beim Ende des Hubvorgangs erreichten definierten Einspanndruck $P_E$ beaufschlagt, was z.B. durch ein aktiv entsperrbares Rückschlagventil 69 gewährleistet werden kann.

Jeder der Hubzylinder kann mit einer mechanischen Verriegelungseinrichtung 75 zum Festklemmen der Kolbenstange in der jeweiligen Ausfahrposition versehen sein. Solche Stangenklemmeinrichtungen sind an sich bekannt und handelsüblich. Sie können z.B. aus Tellerfedern bestehen, die klemmend an der Kolbenstange anliegen, falls die nicht durch hydraulische Beaufschlagung von ihr gelöst werden. Die Stangenverriegelung ist somit immer automatisch wirksam, solange sie nicht durch aktive hydraulische Entriegelung offengehalten wird. Während des durch den Fahrerhebel 53 ausgelösten Hubvorgangs werden die Stangenverriegelungen 75 über die hydraulische Druckleitung 77 offengehalten. Ist der Hubvorgang beendet und jeder Hubzylinder mit dem gewünschten Einspanndruck $P_E$ beaufschlagt, können die Verriegelungen 75 freigegeben werden, so daß die Kolbenstangen der Hubzylinder 17 verriegelt sind und das Bugrad auch dann eingespannt bleibt. wenn z.B. der Druck im Hydrauliksystem ausfällt.

Für das Freigeben und Absetzen eines Bugrades spielen sich die Vorgänge im wesentlichen in umgekehrter Reihenfolge ab. Mittels des vom Fahrer betätigbaren Hebels 53 wird das Ventil 55 in diejenige Stellung gebracht, in der die Druckleitung 47 mit der Leitung 59 und die Leckleitung 49 mit der Leitung 57 verbunden ist. Das Hydraulikmedium gelangt über die Leitung 59 zu den stangenseitigen Arbeitsräumen der Hubzylinder 17, wodurch die Hubschaufeln am Fahrzeug nach hinten bewegt werden, so daß das Bugrad über die Auffahrrampe 9 abgesenkt wird. Das Hydraulikmedium aus den kolbenseitigen Arbeitsräumen fließt dabei über ein Rückschlagventil 76 und die Leitungen 57 und 49 ab. Während dieses Vorgangs ist der Druck in der Leitung 59 und den Hubzylindern 17 niedriger als der Öffnungsdruck eines Druckschaltventils 79, welches die Zuführung von Hydraulikmedium zu den Drehmotoren 31 sperrt. Während des Absenkvorgangs sind deshalb die Hubschaufeln 7 in ihrer ausgeschwenkten Stellung aufgrund der anhand von Fig. 4 beschriebenen Geometrie der Hebelarme 33, 35 blockiert.

Wenn die Hubzylinder 17 das Ende ihres Rückhubes erreicht haben, steigt der Druck in der Leitung 59 so an, daß das Druckschaltventil 79 öffnet und die Zufuhr von Hydraulikmedium zu den Drehmotoren 31 gestattet. Diese drehen sich und schwenken die Hubschaufeln 7 aus der Arbeitsstellung nach Fig. 3 in die Ruhestellung nach Fig. 2 zurück.

## Patentansprüche

1. Schleppfahrzeug für Flugzeuge, mit einem gabelförmigen Fahrgestell, das mit seinen Seitenschenkeln das Bugrad des Flugzeuges umgreift, und einer Hubvorrichtung zum Hintergreifen und Anheben des Bugrades mittels zweier an je einem der Seitenschenkel ein- und ausklappbar gelagerten Hubschaufeln,
   von denen jede Hubschaufel um eine etwa lotrechte Achse schwenkbar an einer Schwinge gelagert ist, die ihrerseits um eine horizontale Querachse drehbar am zugeordneten Seitenschenkel des Fahrgestells gelagert ist,
   wobei für das Ausschwenken der Hubschaufel aus einer an den Seitenschenkel angeklappten Ruhestellung in die um etwa 90° davon abstehende, durch einen Anschlag definierte Arbeitsstellung sowie für die anschließende Drehung der Schwinge für den Hubvorgang ein hydraulischer Antrieb mit einem an der Schwinge angreifenden Hubzylinder vorgesehen ist,
   dadurch **gekennzeichnet,** daß für das Einund Ausschwenken der Hubschaufel um die etwa lotrechte Schwenkachse (21) ein eigener, vom Hubzylinder (17) getrennter hydraulischer Schwenkantrieb (31) vorgesehen ist und daß der im Schwenkantrieb bei Erreichen des Endanschlages der Ausschwenkbewegung eintretende Druckanstieg die Beaufschlagung des Hubzylinders (17) mit Hydraulikmedium steuert.

2. Schleppfahrzeug nach Anspruch 1 , dadurch **gekennzeichnet,** daß der hydraulische Schwenkantrieb (31) ein hydraulischer Drehmotor ist.

3. Schleppfahrzeug nach Anspruch 2 , dadurch **gekennzeichnet,** daß der Drehmotor (31) einen Kurbelarm (33) betätigt, der über einen Koppellenker (35) mit einem Schwenkarm (37) der Hubschaufel (7) verbunden ist, wobei die Armlängen und Schwenkwege so bemessen sind, daß der Koppellenker (35) von der einen auf die andere Seite der Kurbelarmachse überwechselt, bevor der Kurbelarm (33) das durch den Endanschlag (39) festgelegte Ende seines Schwenkweges erreicht.

## Claims

1. Towing vehicle for aircraft, with a fork-like chassis, which engages by its side arms around the nose wheel of the aircraft and a lifting device for engaging behind and lifting the nose wheel by means of two lifting scoops mounted to be swung in and out on respectively one of the side arms, of which each lifting scoop is mounted to tilt about an approximately vertical axis on a rocking arm, which is in turn mounted to rotate about a horizontal transverse axis on the associated side arm of the chassis, a hydraulic drive with a lifting cylinder acting on the rocking arm being provided for swinging the lifting scoop out of an inoperative position folded against the side arm into the working position projecting by approximately 90° therefrom and defined by a stop and for the subsequent rotation of the rocking arm for the lifting process, characterised in that provided for swinging the lifting scoop in and out about the approximately vertical swivel axis (21) is an individual, hydraulic pivot drive (31) separated from the lifting cylinder (17) and that the pressure rise occurring in the pivot drive on reaching the end stop for the swinging-out movement controls the supply of hydraulic medium to the lifting cylinder (17).

2. Towing vehicle according to Claim 1, characterised in that the hydraulic pivot drive (31) is a hydraulic rotary motor.

3. Towing vehicle according to Claim 2, characterised in that the rotary motor (31) actuates a crank arm (33), which is connected by way of a coupling link (35) to a swivel arm (37) of a lifting scoop (7), the arm lengths and swivel displacements being dimensioned so that the coupling link (35) changes over from one side to the other side of the crank arm axis before the crank arm (33) reaches the end of its swivel displacement determined by the end stop (39).

## Revendications

**1.** Véhicule tracteur pour avions, ce véhicule comportant un châssis en forme de fourche, qui entoure la roue avant de l'avion au moyen de ses branches latérales, et un dispositif de soulèvement destiné à saisir la roue avant par son arrière et à la soulever au moyen de deux pelles de soulèvement montées sur chacune des branches latérales de façon à pouvoir être rentrées et sorties,

chacune des pelles de soulèvement étant montée sur un bras oscillant de façon à pouvoir pivoter sur un axe approximativement vertical, lequel bras oscillant est monté de son côté sur une branche latérale correspondante du châssis, de façon à pouvoir tourner sur un axe transversal horizontal,

un dispositif d'entraînement hydraulique comportant un vérin de soulèvement, qui attaque le bras oscillant, étant prévu pour faire pivoter les pelles de soulèvement à partir d'une position de repos où la pelle est rabattue contre la branche latérale jusque dans la position de travail qui présente un écart d'environ 90° par rapport à la position de repos et qui est définie par une butée, ainsi que pour la rotation, qui suit, du bras oscillant pour l'opération de soulèvement, véhicule caractérisé en ce que, pour faire rentrer ou sortir les pelles de soulèvement par pivotement sur un axe (21) de pivotement approximativement vertical, on prévoit un dispositif hydraulique d'entraînement (31) de pivotement propre, indépendant du vérin (17) de soulèvement, et en ce que l'augmentation de pression qui se produit dans le dispositif hydraulique d'entraînement en pivotement, lorsque la butée d'extrémité du mouvement de pivotement vers l'extrémité est atteinte, commande l'alimentation en fluide hydraulique du vérin (17) de soulèvement.

**2.** Véhicule tracteur selon la revendication 1, caractérisé en ce que le dispositif hydraulique d'entraînement (31) en pivotement est un moteur rotatif hydraulique.

**3.** Véhicule selon la revendication 2, caractérisé en ce que le moteur rotatif (31) actionne un bras (33) de manivelle,qui est relié par l'intermédiaire d'une biellette (35) d'accouplement à un bras pivotant (37) des pelles de soulèvement (7), les longueurs de bras et les courses de pivotement étant dimensionnées de façon telle que la biellette (35) d'accouplement passe de l'un à l'autre côté de l'axe du bras de manivelle avant que le bras (33) de manivelle atteigne l'extrémité de sa course de pivotement fixée par la butée (39) d'extrémité.

Fig.1
1
3
3
5
7
7'
9
10

19
17
7
29
27
27
21
22
20
15
37
35
23
13
33
31
11
3

Fig. 2

Fig. 3
19
17
15
23
25
22
20
21
13
11
3
27
31
33
35
7
29
27

Fig. 4
3
3
19
17
25
7
7'
36
37
35
21
23
13
39
31
33
33'
34
7
36
23
21
33
34
35
31
41
11
11

Fig. 5